# EUROPEAN PATENT APPLICATION

(11) **EP 1 936 206 A1**
(43) Date of publication of application: **25.06.2008**
(21) Application number: 07024479.3
(22) Date of filing: 18.12.2007
(51) Int. Cl.: F04D 29/36

(54) **Fan device with blades with selectable inclination**

(30) Priority: 22.12.2006 IT VA20060084
(71) Applicant: Technosprings Italia S.r.L., 21020 Besnate (VA) (IT)
(72) Inventor: Gualandris, Romano, 21013 Gallarate (Varese) (IT); Stortiero, Francesco, 20099 Sesto San Giovanni (Milano) (IT)
(74) Representative: Lunati, Vittoriano

(57) **Abstract**

Provided herein a fan device with blades with selectable inclination designed to vary the inclination of the blades as the operating temperature varies and comprising: an airscrew (3), including a rotation shaft (5) and a plurality of blades (6) with a degree of rotational freedom in a radial direction (6a); a supporting structure (2), designed to support at least the airscrew (3); an adjustment rod (10) connected to the blades (6) in a way, designed to link its own axial rotation to the rotation of the blades (6) with respect to said degree of freedom (6a); and a sensor and actuator assembly (4) including an actuator element (12) made of shape-memory material, designed to vary the axial angular position of the adjustment rod (10) as the operating temperature varies.

## Description

The subject of the present invention is a fan device with blades with selectable inclination of the type described in the preamble of Claim 1.

Known to the art are fan devices used for air-conditioning systems and the like.

Said fan comprises an airscrew designed to diffuse a fluid, in particular air, in the environment.

As is known, airscrews are made up of one or more blades set radially about the axis of rotation of the airscrew itself and having a surface that can be plane or partially curved.

A very important parameter for defining the characteristics of airscrews is the angle of inclination of the blades, or simply inclination.

The inclination is represented by the angle α comprised between the chord that approximates the direction of transverse development of the blades and the direction perpendicular to the axis of rotation of the airscrew.

If the inclination is very high, and close to a right angle, the blades are substantially set along a plane perpendicular to the axis of rotation of the airscrew and diffuse the air almost exclusively in a radial direction.

Instead, if the inclination is very small, the blades have a direction of transverse development substantially parallel to the axial direction and diffuse the air almost exclusively in an axial direction.

This characteristic is very important in particular in fans for air-conditioning apparatuses designed both to raise and to reduce the temperature of the conditioned environment.

In fact, in the case where said fans are set, for example, high up in indoor environments and introduce heating air into the environment itself, it is expedient for said air to be conveyed as far as ground level, whilst, in the case where said fans introduce cooling air, it is expedient for said air to be diffused by the fan above all in a radial direction.

In fact, as is known, since the hotter air rises, it is expedient for it to be conveyed immediately downwards from where it will diffuse into the environment with convective motion, whilst since the cooler air moves downwards, it is expedient for it to be diffused immediately in the entire environment.

In order to perform the optimal and differentiated distribution of air described above, present on the market are fans with airscrews having a selectable inclination.

Said fans are provided with airscrews having blades that have a controllable degree of rotational freedom in a radial direction.

In particular, said blades are connected to the shaft of the airscrew by means of a radial shaft mechanically connected to a motor designed to control rotation of the blades in a radial direction.

Said motor is moreover controlled by a purposely provided thermostat, which activates automatically, or via manual intervention, the radial rotation of the blades.

The known art referred to above presents certain important drawbacks.

In fact, the device that enables radial rotation of the blades and variation of the inclination thereof is complex and bulky.

In particular, said device is made up of at least one electric motor, at least one thermostat, members for connection between the electric motor and the blades, and members for control of the electric motor.

On account of the presence of the elements described and of their volume, the device described is often cumbersome and obstructs the flow of air conveyed by the fan itself.

In addition, the fan including the apparatus described proves very complex, costly, and easily subject to malfunctioning.

In such a situation, the technical task of the present invention is to develop a fan device with blades with selectable inclination that will be able to overcome substantially the drawbacks mentioned above.

In the framework of said technical task, an important purpose of the invention is to obtain a fan device with blades with selectable inclination that will enable an optimal flow of the air.

Another important purpose of the invention is to provide a fan device with blades with selectable inclination that is simple, operates automatically, and is reliable.

Not the least important purpose of the invention is to provide a fan device with blades with selectable inclination that is inexpensive and functional.

The technical task and the purposes specified above are achieved by a fan device that is characterized in that it comprises one or more of the new technical solutions described and claimed hereinafter.

Illustrated by way of example in the attached drawings are preferred embodiments of the invention. In particular:
**Figure 1a** shows the device according to the invention with the blades set in a first position;
**Figure 1b** illustrates the device according to the invention with the blades set in a second position;
**Figure 2** represents a detail of the device according to the invention; and
**Figure 3** illustrates the section III-III, indicated in Figure 1, of the device according to the invention.

With reference to the figures, the device according to the invention is as a whole designated by the reference number 1.

Broadly speaking it comprises: a structure **2** for supporting the device 1; an airscrew **3;** and a sensor and actuator assembly **4,** designed to vary the inclination of the airscrew as the operating temperature varies, and in particular as the use for cooling activities or heating activities varies.

More in particular, the supporting structure 2 is constituted by the fixed external portion of the fan device 1 and is connected to the architectural elements of the environment in which it is introduced. In particular, it can be constituted by portions of ducts for conditioned air or by purposely provided casings fixed to walls and the like or again by casings fixed to the ground by means of rods or pedestals or the like.

In the case illustrated in the figures listed, the supporting structure 2 forms part of a conditioning system connected to the ceiling of an environment. Said structure is constituted by a tubular element having a diameter just a little larger than the diameter of the airscrew 3.

The airscrew 3 includes a rotation shaft **5** and a plurality of blades **6.**

In particular, the rotation shaft 5 has an axis **5a** and transmits, in particular to the blades 6, the rotary motion of the airscrew about the axis 5a.

More in particular, the shaft 5 is constituted by a hollow tubular body made of metal or polymeric material.

The rotation shaft 5 is connected to an electric motor **7,** designed to supply the airscrew 3 with the rotary motion about the axis 5a. Said electric motor is of a known type and is conveniently connected to the electric mains supply.

The rotation shaft 5 is moreover fixed with respect to a terminal element **8,** designed to support the blades 6 and to connect them to the shaft 5. Said terminal element 8 is preferably constituted by a hollow cylindrical body made of the same material as the shaft 5.

The blades 6 of the airscrew 3 are then mechanically connected to the terminal element 8.

In addition, the blades 6 conveniently present one degree of rotational freedom in a radial direction **6a.** In practice, they are able to oscillate angularly and are hence preferably connected to the terminal element 8 via a shaft **6b** for connection to one or more rotary bearings **9** arranged on the wall of the terminal element 8. The aforementioned degree of freedom enables the airscrew 3 to vary the inclination of the blades 6, namely, the angle **α** comprised between the plane of lie, or the plane that best approximates the lie, of each blade 6 and the axis 5a.

The blades 6, of a known type, are preferably six in number. Said blades can be plane or curved and be made of metal or polymeric material. In particular, the blades 6 illustrated in the figures listed are plane.

The fan device 1 then comprises the sensor and actuator assembly 4, which is sensitive to the operating temperature and is consequently designed to rotate the blades 6 in the radial direction 6a.

Said sensor and actuator assembly 4 is preferably set in the proximity of the electric motor 7 and inside the supporting structure 2.

In particular, the sensor and actuator assembly 4 is connected to an adjustment rod **10,** which can turn axially and is designed to control said actuator assembly.

The above adjustment rod 10 is structurally connected to the blades 6 in such a way that its own axial rotation will determine the radial rotation in the direction 6a of the blades 6.

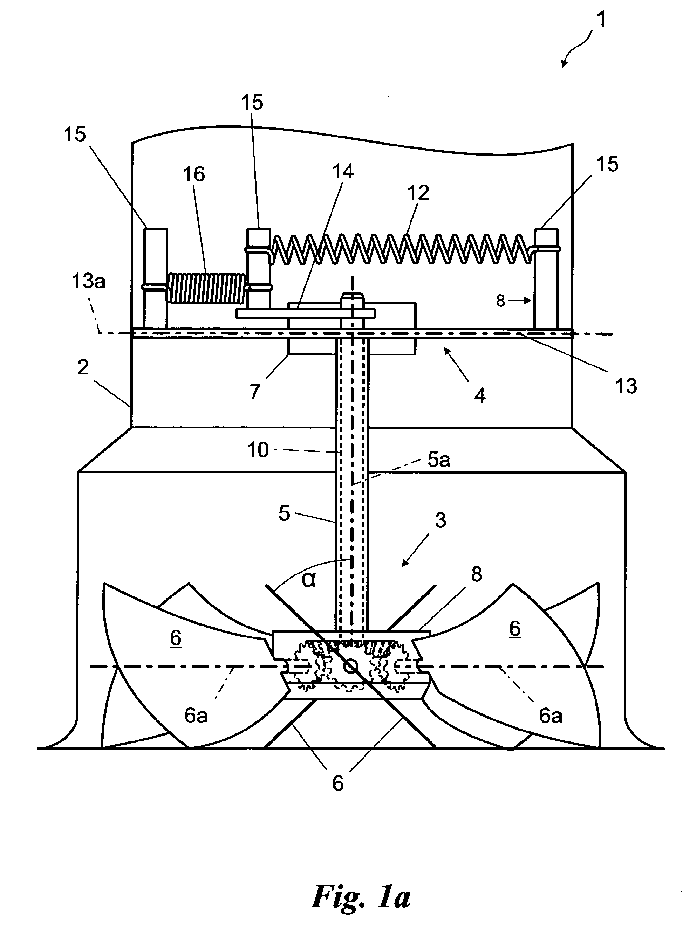

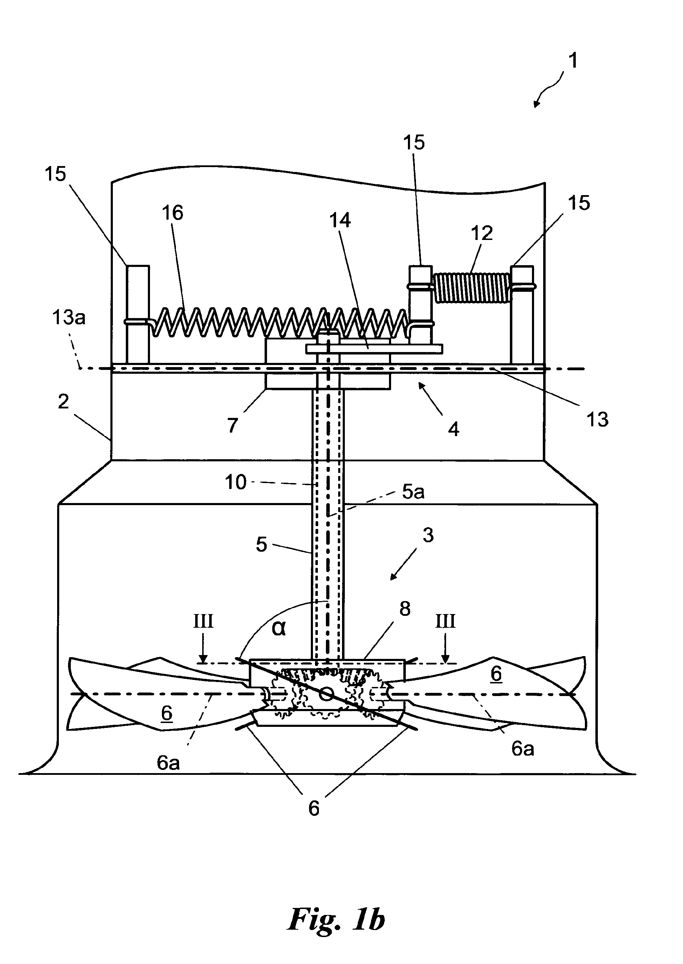

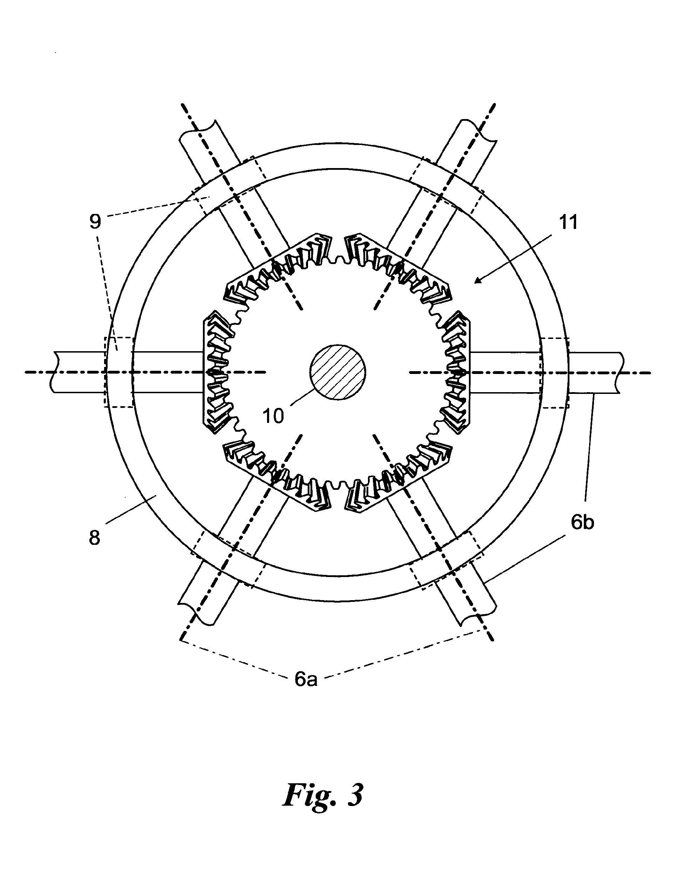

For example, Figures 1a, 1b and 3 illustrate connections **11,** which join the adjustment rod 10 and the blades 6, constituted by bevel gear pairs. In particular, said connections are constituted by bevel gear pairs presenting a ratio of transmission between the rotation of the adjustment rod 10 and the radial rotation of the blades 6 of 2:1.

The adjustment rod 10 illustrated is conveniently set inside the rotation shaft 5 and co-axially thereto.

The sensor and actuator assembly 4 then comprises an actuator element **12** made of shape-memory material, designed to vary in the axial direction the angular position of the adjustment rod 10 as the operating temperature varies.

In particular, the sensor and actuator assembly 4 is designed to rotate the adjustment rod 10 by means of a crank mechanism, which operates by varying the length of the actuator element 12 as a function of temperature. In addition, said variation of length occurs conveniently as a consequence of the variation of elastic response of the actuator element 12 in relation to the variation of temperature, as specified more fully hereinafter.

As is known, in fact, shape-memory materials present at least two different phases of crystalline structure at temperatures close to the temperatures of operation and use thereof. At said temperatures the shape-memory materials assume different mechanical and/or geometrical characteristics.

Thanks to said peculiarities, it is possible to vary the geometry or the mechanical characteristics of an element made of shape-memory material by varying its own temperature.

In particular, known as SMAs (Shape Memory Alloys) are shape-memory metal alloys that present at least two different phases of crystalline structure at temperatures close to the operating temperatures, said different phases entailing different physical properties such as the elastic moduli, or Young's moduli.

The sensor and actuator assembly 4 further comprises a supporting body **13,** fixed with respect to the supporting structure 2 and designed to support the actuator element 12 and other components of the device 1 described hereinafter.

It has a prevalent plane development, lying in a plane of development **13a** that is preferably substantially perpendicular to the adjustment rod 10.

More in particular, the supporting body 13 comprises one central element **13b,** constituted by a rod that traverses diametrally the supporting structure 2, and two side elements **13c,** substantially constituted by curved rods that follow the circular profile of the supporting structure 2.

The sensor and actuator assembly 4 then comprises a control lever **14,** which is constrained to the supporting body 13 and can turn with respect to the supporting body 13 itself about an axis of rotation **14a,** preferably parallel to and coinciding with the axis of the adjustment rod 10. In the specific case, the control lever 14 is conveniently directly connected to the adjustment rod 10.

In particular, the control lever 14 is substantially constituted by a rod lying in the plane of development 13a of the supporting body 13, and constrained at one end to a rotational hinge, fixed with respect to the body 13 and designed to enable rotation of the lever 14 about the axis 14a.

More in particular, said rotational hinge is fixed with respect to the central element in an area corresponding to the centre of the supporting body 13 coinciding with the centre of the piping that constitutes the supporting structure 2.

The actuator element 12 made of shape-memory material, which has been partially described, is conveniently constituted by an elastic element designed to exert a force proportional to its elongation along at least one direction of action **12a.**

In particular, the actuator element 12 can be constituted by a helical spring the length of which varies in a linearly proportional way with the force applied thereto in the direction of the axis of the helicoid, coinciding with the direction of action 12a.

In particular, the force applied by an elastic element can be simply obtained from the product between the elongation of the spring and an elastic constant.

Alternatively, there can exist different proportions between the elongation of the spring and the force applied thereby. However, in the present text only a linear approximation of the relation between force and elongation will be taken into account so that the elastic constant alone will substantially determine the totality of the characteristics of the elastic element.

The elastic element constituted by the actuator element 12 made of shape-memory material is moreover designed to vary its own elastic constant at at least two different operating temperatures.

It is in fact preferably made of a metal SMA; for example, an alloy Ni_{X}Ti_{100-X}, with 49at%<X<51at% at appropriate compositions and after appropriate thermal treatments at temperatures of between 300°C and 700°C can present at 20°C an elastic modulus of approximately 30 GPa and at 40°C an elastic modulus of approximately 70 GPa.

As is known, the elastic constant of the elastic element made of said material varies proportionally with the elastic modulus of the material.

Consequently, an elastic element made of shape-memory material has two different elastic constants for example at a temperature of 20°C and a temperature of 40°C.

It should be emphasized that substantially all the materials present slight differences of elastic modulus as a function of temperature, in particular in the proximity of the melting points. However, said differences of elastic modulus cannot be used for the purpose of the device 1 in so far as they are too contained.

Instead, shape-memory materials present elastic moduli having values that vary considerably at the transition between the crystalline phases, which occurs in narrow temperature intervals, as in the case mentioned above.

The actuator element 12 is constrained to the supporting body 13 and to the control lever 14, not in a point coinciding with the axis of rotation 5a.

It has a direction of action 12a conveniently parallel to the plane of development 13a and is preferably constrained at its ends to two appendages **15,** in particular to a control appendage **15a,** fixed with respect to the supporting body 13, and to a control appendage **15b,** fixed with respect to the control lever 14.

Said appendages 15 conveniently comprise two rotational hinges designed to enable loading of the actuator element 12 to occur always along the direction of action 12a.

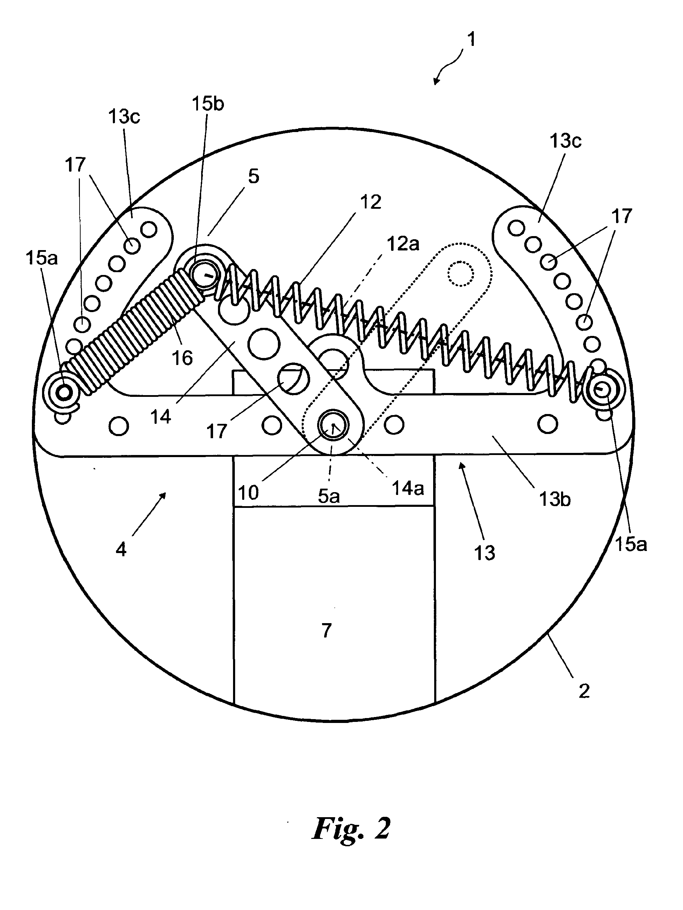

In particular, if the actuator element 12 is constituted by a helical spring, its ends are preferably constituted by two circular hooks, which have an axis in a direction perpendicular to the direction of action of the actuator element 12a, and the appendages 15 are preferably constituted by two circular pins arranged on the supporting body 13 and on the lever 14 and having a principal direction of development perpendicular to the plane of development 13a, as illustrated in Figure 2. Said circular pins enable in fact a rotation of the circular hooks about them.

The actuator element 12 is then designed to determine a twisting torque acting on the control lever 14 about the axis of rotation 14a.

Said twisting torque varies as a function of the distance of the control appendage 15b from the axis of rotation 14a and of the force exerted by the actuator element 12, proportional to its elastic constant.

The twisting torque then varies also as a function of the operating temperature of the sensor and actuator assembly 4, and in particular assumes two different values at temperatures that determine two different phases of crystalline structure of the shape-memory material that constitutes the elastic actuator element 12.

The sensor and actuator assembly 4 then comprises a return torque acting on the control lever 14 about the axis of rotation 14a and opposing the twisting torque determined by the actuator element 12 made of shape-memory material.

Said return torque is preferably substantially constant as the temperature varies in the proximity of said operating temperatures. It can be produced by a further elastic element or, alternatively, by a magnetic force, a gravitational force, or the like.

In particular, in the present figures, the return torque is constituted by an elastic contrast element **16,** constituted by a helical spring partially constrained to the supporting body 13 and to the control lever 14.

More in particular, the contrast element 16 is constituted by a helical spring made of steel or the like having an elastic constant that is substantially constant as the temperature varies.

Also the elastic contrast element 16 is preferably constrained at its ends to two appendages 15, in particular to a control appendage 15a, fixed with respect to the supporting body 13 and to a control appendage 15b, fixed with respect to the control lever 14.

The appendages 15 and the ends of the elastic contrast element 16 are preferably altogether similar to the appendages 15 of the actuator element 12 and to the ends thereof, and in addition the control appendage 15b of the elastic contrast element 16 can coincide with the control appendage 15b of the actuator element 12, as illustrated in Figure 2.

The supporting body 13 and the control lever 14 further conveniently comprise a plurality of seats **17** designed to house the appendages 15.

In particular, said seats 17 can be set at regular intervals along the axis of the lever 14 and circularly along the two side elements 13c.

Said seats 17 can be constituted by simple holes in which the appendages 15 can be constrained by means of screws or the like.

Alternatively, the appendages 15 can be constituted by sleeves or the like, which can be housed in a preferred position along the control lever 14 or the supporting body 13. In this case, the seats 17 can be constituted by notches or the like designed to indicate the position of the appendages 15.

Operation of a fan device 1, described above from the structural standpoint, is outlined in what follows.

The fan device 1 is connected, for example, to an air-conditioning system, set in an indoor environment and designed to heat or cool the air of said environment.

In particular, the air-conditioning system comprises one or more fan devices 1, set in the proximity of the ceiling of the environment that is to be conditioned and designed to emit in the environment hot or cold air, through the action of the airscrew 3, in order to vary the temperature of the environment itself.

As has been specified regarding the known art, it is expedient for the airscrew to have a reduced angle of inclination α in the case where it expels hot air, and a large angle of inclination α in the case where it expels cold air.

In a first case, illustrated in Figure 1a, the fan device 1 emits hot air into the environment, at a temperature that will be referred to as "first operating temperature" and that is, for example, comprised between 25°C and 40°C.

The air flows in a region corresponding to the sensor and actuator assembly 4 and brings this and the actuator element 12 to the first operating temperature.

At said first operating temperature, the shape-memory material is in a first phase, and the actuator element 12 has a first elastic constant. The actuator element 12 hence exerts a certain twisting torque opposing the return torque.

The difference between the twisting torque and the return torque gives rise to a resultant torque, which causes a possible rotation of the lever 14, which is stopped when the equilibrium of the torques is reached or simply by the end of travel reached by an element 12 or 16, as illustrated in Figure 2.

Corresponding to said rotation or positioning is a first angular positioning of the adjustment rod 10.

The angular position of the adjustment rod 10 is linked to the angular position of the connection shafts 6b and hence of the blades 6.

In particular, at said first operating temperature, corresponding to emission of hot air, the blades 6 are set with an angle of inclination α comprised between 20° and 30°, and are hence designed to diffuse hot air in particular in the axial direction.

In a second case, illustrated in Figure 1b, the fan device 1 emits cold air into the environment, at a temperature that will be referred to as "second operating temperature" and that is for example comprised between 10°C and 20°C.

The air flows in a region corresponding to the sensor and actuator assembly 4 and brings this and the actuator element 12 to the second operating temperature.

At said second operating temperature, the shape-memory material is in a second phase, and the actuator element 12 has a second elastic constant.

The actuator element 12 hence exerts a different twisting torque, once again opposing the return torque.

The difference between the new twisting torque and the return torque gives rise to a new resultant torque, different from the previous one.

Said new resultant torque has, for example, a direction opposite to the direction of the first resultant torque and causes rotation in an opposite direction of the lever 14 and hence of the adjustment rod 10. This situation arises in particular when the elastic constant of the elastic element that forms the actuator element 12 has values higher or lower than the value of the elastic constant of the elastic element 16 in relation to the phase of the material that constitutes it.

Also in this case, corresponding to said rotation or different positioning is a different angular positioning of the adjustment rod 10, and the angular position of the adjustment rod 10 is linked to the angular position of the connection shafts 6b and hence of the blades 6.

In particular, the angular position of the adjustment rod 10 can vary by approximately 80°, and the position of the blades 6 by an angle of amplitude equal to half of the amplitude of the angle indicated, as a consequence of the transmission ratio of the connections 11.

In particular, at said second operating temperature, corresponding to emission of cold air, the blades 6 are set with an angle of inclination α comprised between 45° and 60° and are hence designed to diffuse the cold air in particular in a radial direction.

The resultant torque and the angular range of the regulator shaft 10 are selectable.

It is in fact possible to arrange the elements 12 and 16 in preferred positions along the seats 17 and consequently regulate the arm of the torques or elongation of the elements 12 and 16.

It is moreover possible to select the ratio of transmission of the connections 11.

The invention enables important advantages.

In fact, the fan device 1 changes inclination according to the temperature, acting automatically and not involving the addition of regulator members, sensors, and the like.

The shape-memory actuator element 12 functions in fact as sensor, as actuator, and also as generator of the mechanical energy necessary for adjustment of the inclination. It replaces numerous complex members, comprising, for example, an electric motor, a battery, a thermal sensor, etc.

On account of the above features the fan device 1 can guarantee considerable reliability and economy.

A further advantage is represented by the fact that the fan device 1 enables an optimal flow of air.

It is in fact made up of a small number of elements, prevalently arranged along the perimeter of the supporting structure 2, which consequently do not interfere to a major extent with the flow of hot or cold air.

The invention may undergo modifications and variations, all of which fall within the scope of the inventive idea.

For example, the actuator element 12 could be constituted by a simple rod designed to vary its length as a function of the temperature and to rotate the lever 14.

All the items can be replaced by equivalent elements, and the materials, shapes, and dimensions may be any whatsoever.

## Claims

1. A fan device with selectable inclination designed to vary inclination of the blades as the operating temperature varies and comprising a supporting structure (2), an airscrew (3) supported by said supporting structure (2) and including a rotation shaft (5) and a plurality of blades (6), each of said blades (6) having a degree of rotational freedom in a radial direction (6a), and an adjustment rod (10) connected to said blades (6) in a way designed to correlate its own axial rotation with the rotation of said blades (6) with respect to said degree of freedom (6a), and being **characterized in that** it comprises: a sensor and actuator assembly (4) including an actuator element (12) made of shape-memory material designed to vary the axial angular position of said adjustment rod (10) as the operating temperature varies.

2. The device according to preceding claim, in which said sensor and actuator assembly (4) comprises: a control lever (14), which is supported by said supporting structure (2) and can turn with respect to said supporting structure (2) about a control axis (14a), and designed to rotate said adjustment rod (10), and in which said actuator element (12) made of shape-memory material is designed to vary at least one linear dimension as the operating temperature varies and is constrained to said supporting structure (2) and to said control lever (14) in such a way that its linear deformation is designed to determine an angular displacement of said control lever about said control axis (14a).

3. The device according to one or more of the preceding claims, in particular Claim 2, in which said actuator element (12) is an elastic element made of shape-memory material designed to vary its own elastic constant at different operating temperatures, the elastic deformation of said elastic element being designed to determine a driving torque acting on said control lever (14) about said control axis (14a)
and in which said sensor and actuator assembly (4) moreover comprises a return torque acting on said control lever (14) opposing said driving torque.

4. The device according to one or more of the preceding claims, in particular Claim 2, in which said control axis (14a) coincideS with the axis of said adjustment rod (10) and in which said control lever (14) is directly connected to said adjustment rod (10).

5. The device according to one or more of the preceding claims, in particular Claim 3, in which said actuator element (12) made of shape-memory material is constituted by a helical spring.

6. The device according to one or more of the preceding claims, in particular Claim 3, in which said return torque is constituted by an elastic contrast element (16), constrained to said supporting structure (2) and to said control lever (14) in such a way that its elastic deformation is designed to determine said return torque.

7. The device according to one or more of the preceding claims, in particular Claim 2, in which said sensor and actuator assembly (4) comprises a supporting body (13) constrained to said supporting structure (2) and designed to support at least said control lever (14) and said actuator element (12).

8. The device according to one or more of the preceding claims, in particular Claim 7, in which said supporting body (13) has a plane prevalent development lying in a plane of development (13a) substantially perpendicular to said adjustment rod (10) and in which said supporting body (13) comprises one central element (13b), constituted by a rod that traverses diametrally said supporting structure (2), and two side elements (13c) substantially constituted by curved rods that follow the circular profile of said supporting structure (2).

9. The device according to one or more of the preceding claims, in particular Claim 2, in which said actuator element (12) is constrained to two appendages (15), one fixed with respect to said supporting structure (2) and the other to said control lever (14) and in which said control lever (14) comprises a plurality of seats (17) designed to house one of said appendages (15).

10. The device according to one or more of the preceding claims, in particular Claim 2, in which said actuator element (12) is constrained to two appendages (15), one fixed with respect to said supporting structure (2) and the other to said control lever (14) and in which said supporting structure (2) comprises a plurality of seats (17) designed to house one of said appendages (15).

11. The device according to one or more of the preceding claims, in particular Claim 1, in which said rotation shaft (5) is hollow and in which said adjustment rod (10) is set inside and co-axially with respect to said rotation shaft.

12. The device according to one or more of the preceding claims, in particular Claim 1, in which said adjustment rod (10) is connected to said blades (6) by means of connections (11), constituted by bevel gear pairs.
